# EUROPEAN PATENT APPLICATION

(11) **EP 4 187 640 A1**
(43) Date of publication of application: **31.05.2023**
(21) Application number: 22162148.5
(22) Date of filing: 15.03.2022
(51) Int. Cl.: H01M 4/131, H01M 4/134, H01M 4/62, H01M 10/0525, H01M 10/0562, H01M 10/0565, H01M 4/02

(54) **COMPOSITE NEGATIVE ELECTRODE STRUCTURE**

(30) Priority: 24.11.2021 TW 110143854
(71) Applicant: SolidEdge Solution Inc., 300094 Hsinchu City (TW); Hon Hai Precision Industry Co., Ltd., 236038 New Taipei City (TW)
(72) Inventor: CHANG, Chih-Ching, 300094 Hsinchu City (TW); LAI, Hong-Zheng, 300094 Hsinchu City (TW); CHEN, Wei-Chao, 300094 Hsinchu City (TW); CHANG, Tseng-Lung, 300094 Hsinchu City (TW)
(74) Representative: Winter, Brandl - Partnerschaft mbB

(57) **Abstract**

A composite negative electrode structure includes a current collecting layer, a porous layer, a plurality of lithiophilic structures, and a solid-state electrolyte layer. The porous layer is located on a surface of the current collecting layer and includes a plurality of pores. The lithiophilic structures are located on the surface of the current collecting layer and accommodated in some of the pores. The solid-state electrolyte layer is located on the porous layer.

## Description

### BACKGROUND

### Field of Invention

The present disclosure relates to a composite negative electrode structure.

### Description of Related Art

With the rapid development of technology, various portable batteries have gradually come out, and people have higher demands for high performance and light weight of portable batteries. As these demands become stronger, lithium-ion batteries have received high attention and widespread use due to their high energy density and rapid charging capabilities.

However, during charging, due to reduction of lithium ions and random deposition of lithium ions on the surface of the electrode, when using the lithium metal negative electrode, the interlayer structure of the battery is prone to be propped up, resulting in the expansion of the battery and even the lithium dendrite penetration problem. Therefore, how to change the behavioral pattern of lithium deposition to improve the above-mentioned shortcomings is indeed the focus of research and development in the field.

### SUMMARY

According to some embodiments of the present disclosure, the composite negative electrode structure includes a current collecting layer, a porous layer, a plurality of lithiophilic structures, and a solid-state electrolyte layer. The porous layer is located on a surface of the current collecting layer and includes a plurality of pores. The lithiophilic structures are located on the surface of the current collecting layer and is accommodated in some of the pores. The solid-state electrolyte layer is located on the porous layer.

In some embodiments of the present disclosure, the solid-state electrolyte layer is partially embedded in the porous layer.

In some embodiments of the present disclosure, the porous layer has a first portion near the current collecting layer and a second part away from the current collecting layer, and the abundance of the lithiophilic structures in the first portion is greater than the abundance of the lithiophilic structures in the second portion.

In some embodiments of the present disclosure, the porous layer further has a third portion, the second portion is located between the first portion and the third portion, and the abundance of the lithiophilic structures in the third portion is zero.

In some embodiments of the present disclosure, the average particle size of the lithiophilic structures ranges from 0.1 µm to 1 µm.

In some embodiments of the present disclosure, the average pore size of the pores ranges from 0.1 µm to 10 µm.

In some embodiments of the present disclosure, the porous layer includes a plurality of carbon nanomaterials, the carbon nanomaterials are staggeredly stacked on each other, and the pores are located between the adjacent carbon nanomaterials, in which the carbon nanomaterials comprise carbon nanowires, carbon nanotubes, carbon nanofilament, carbon nanofibers, or combinations thereof.

In some embodiments of the present disclosure, the total thickness of the porous layer ranges from 1 µm to 100 µm, and the total thickness of the lithiophilic structures ranges from 0.1 µm to 10 µm.

In some embodiments of the present disclosure, the material of the lithiophilic structures may include silver, gold, platinum, aluminum, zinc, magnesium, silicon, tin, nickel, an oxide of any of the foregoing metals, a combination of any of the foregoing metals and metal oxides, or an organic framework material (MOF) of any of the foregoing metals.

In some embodiments of the present disclosure, the solid-state electrolyte layer may include a lithium salt, a polymer, and a solid-state electrolyte. The polymer includes polyvinylidene fluoride, polymethyl methacrylate, polyacrylonitrile, polyethylene oxide, or combinations thereof. The solid-state electrolyte includes lithium aluminium titanium phosphate, lithium lanthanum tantalum oxide, lithium lanthanum zirconium oxide, or combinations thereof.

In some embodiments of the present disclosure, the lithium aluminium titanium phosphate is Li_{1.3}Al_{0.3}Ti_{1.7}(PO₄)₃, the lithium lanthanum tantalum oxide is La_{0.57}Li_{0.29}TiO₃, and the lithium lanthanum zirconium oxide is Li₇La₃Zr₂O₁₂.

In some embodiments of the present disclosure, the lithium salt is lithium perchlorate, lithium bis(fluorosulfonyl)imide, lithium bis(trifluoromethanesulfonyl)imide, or combinations thereof.

In some embodiments of the present disclosure, the abundance of the lithiophilic structures gradually decreases from the first portion of the porous layer to the second portion of the porous layer.

In some embodiments of the present disclosure, the solid-state electrolyte layer encapsulates each of the lithiophilic structures.

In some embodiments of the present disclosure, the solid-state electrolyte layer encapsulates each of the carbon nanomaterials of the porous layer.

According to the aforementioned embodiments of the present disclosure, the composite negative electrode structure of the present disclosure is achieved by complementary relationship between the porous layer and the lithiophilic structures, in which the porous layer can alleviate the volume expansion of the negative electrode during charging, and the lithiophilic structures can enable the lithium ions in the solid-state battery to be reduced at the lithiophilic structures to form lithium metal. The lithium metal formed can then expand and grow outward with the lithiophilic structure as a nucleation point, and its growth can be restricted to the pores of the porous layer, and then deposited in an orderly manner. In this way, the deposition pattern of the lithium metal in the solid-state battery can be changed to promote the orderly deposition of the lithium metal, thus avoiding the massive generation of solid electrolyte interface (SEI) due to the high specific surface area of the porous layer and reducing the irreversible capacity after the first charge and discharge. The composite negative electrode structure of the present disclosure can therefore improve the volume expansion of the solid-state battery and the capacity loss at the first charge and discharge. In addition, the composite negative electrode structure of the present disclosure can also reduce the possibility of the lithium deposition on the electrode surface, and reduce the safety problems caused by lithium dendrite penetration.

### BRIEF DESCRIPTION OF THE DRAWINGS

Fig. 1 illustrates a schematic cross-sectional view of a composite negative electrode structure according to some embodiments of the present disclosure;
Fig. 2 illustrates a schematic cross-sectional view of a solid-state battery according to some embodiments of the present disclosure; and
Fig. 3 illustrates the voltage-time relationship for different stacked structures.

### DETAILED DESCRIPTION

The present disclosure provides a composite negative electrode structure and a solid-state battery including the composite negative electrode structure. With the arrangement of the lithiophilic structures and the porous layer in the composite negative electrode structure, the deposition pattern of lithium metal in the solid-state battery can be effectively changed to promote the orderly deposition of lithium metal, which can not only improve the volume expansion of the solid-state battery, but also suppress the massive generation of solid electrolyte interface and reduces the capacity loss caused by the first charge and discharge. The composite negative electrode structure of the present disclosure can also reduce the possibility of the deposition of the lithium metal on the electrode surface and reduce the formation of lithium dendrites.

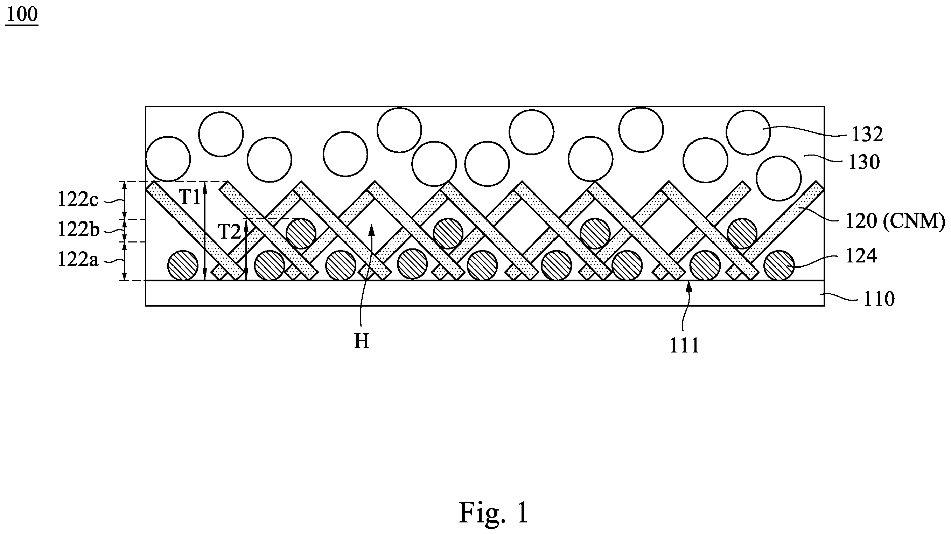

Referring to Fig. 1, a schematic cross-sectional view of a composite negative electrode structure 100 according to some embodiments of the present disclosure is shown. The composite negative electrode structure 100 includes a current collecting layer 110, a porous layer 120, lithiophilic structures 124, and a solid-state electrolyte layer 130. The porous layer 120 is located on a surface 111 of the current collecting layer 110, and the surface 111 of the current collecting layer 110 has a plurality of lithiophilic structures 124, that is, the lithiophilic structures 124 are located on the surface 111 of the current collecting layer 110. The porous layer 120 has a plurality of pores H, and the lithiophilic structures 124 are located in some of the pores H.

In some embodiments, the current collecting layer 110 may be copper foil, stainless steel foil, nickel foil, or other suitable metal alloy foil.

In some embodiments, the porous layer 120 includes a plurality of carbon nanomaterials (CNM), and the carbon nanomaterials CNM are staggeredly stacked on top of each other on the surface 111 of the current collecting layer 110 to form a plurality of pores H, that is, the pores H are located between the adjacent carbon nanomaterials CNM. In some embodiments, the carbon nanomaterials CNM include carbon nanowires, carbon nanotubes, carbon nanofilaments, carbon nanofibers, or combinations thereof. In some embodiments, the carbon nanotube materials can be, for example, a single-walled carbon nanotube (SWCNT), a multi-walled carbon nanotube (MWCNT), or combinations thereof. It is worth noting that since the weight of the carbon-containing material is relatively small per unit volume (i.e., less dense), the overall weight of the solid-state battery can be substantially reduced when the porous layer 120 includes the carbon nanomaterials CNM. In some embodiments, the aspect ratio (i.e., length: diameter) of the carbon nanomaterial CNM may be greater than 20 to provide good mechanical strength and to facilitate the stacking of the carbon nanomaterials CNM to form an effective pore space, which further facilitates the accommodation of the lithiophilic structures 124 in the pores H. It should be understood that, in addition to the aforementioned carbon nanomaterials CNM, other carbon nanomaterials CNM with the above-mentioned aspect ratio are also covered by the present disclosure.

In some embodiments, the average pore size of the pores H may range from 0.1 µm to 10 µm to facilitate the accommodattion of the lithiophilic structures 124 and to provide sufficient space for the lithium metal to be deposited in the pores H in an orderly manner, thereby improving the problem of volume expansion of the solid-state battery during charging. On the other hand, the design of the above-mentioned pore size range also allows the solid-state electrolyte layer 130 to be more easily embedded in the porous layer 120, which further increases the overall structural stability of the composite negative electrode structure 100. In some embodiments, a thickness T1 of the porous layer 120 may range from 1 µm to 100 µm, or range from 20 µm to 100 µm, to provide sufficient space for the orderly deposition of the lithium metal.

In some embodiments, the lithiophilic structures 124 may include silver, gold, platinum, aluminum, zinc, magnesium, silicon, tin, nickel, an oxide of any of the foregoing metals, a combination of any of the foregoing metals and metal oxides, or an organic framework material (MOF) of any of the foregoing metals. By disposing the lithiophilic structures 124 on the surface 111 of the current collector layer 110, and through the selection of the above materials, the lithium ions generated by the solid-state battery tend to attach to the surface of the lithiophilic structures 124 and to be reduced to lithium metal, and thus the lithium metal is deposited around the lithiophilic structures 124 in an orderly manner. In other words, a lithiophilic structure 124 is equivalent to a nucleation point, allowing the lithium metal to grow and expand outwardly in an orderly manner with the nucleation point as a growth center. In this way, the massive formation of solid electrolyte interface (SEI) can be avoided, and the irreversible capacity of the first charge and discharge can be reduced. In addition, it also reduces the deposition of lithium metal on the electrode surface and the occurrence of lithium dendrite penetration, thus enhancing the safety of solid-state batteries.

In some embodiments, the average particle size of the lithiophilic structures 124 may range from 0.1 µm to 1 µm, so that the lithiophilic structures 124 have sufficient specific surface area for the reduction and deposition of lithium metal, thereby improving the efficiency of the cycle, and facilitating the accommodation of the lithiophilic structures 124 in the pores H. On the other hand, the average particle size range of the lithiophilic structures 124 is designed to enhance the dispersibility of the lithiophilic structures 124 in the solution during the process to facilitate the uniform formation of the lithiophilic structures 124 on the surface 111 of the current collecting layer 110. In some embodiments, the total thickness T2 of the lithiophilic structures 124 may range from 0.1 µm and 10 µm, so that the lithiophilic structures 124 are uniformly and appropriately distributed over the current collecting layer 110. In detail, if the total thickness T2 of the lithiophilic structures 124 is too small, it is not sufficient to induce the lithium metal to be preferentially reduced at the lithiophilic structure 124; if the total thickness T2 of the lithiophilic structures 124 is too large, the porous layer 120 might accommodate less lithium metal, causing the volume of the solid-state battery to expand and the lithiophilic structures 124 located at a lower layer (e.g., closer to the current collecting layer 110) thus cannnot be effectively utilized, resulting in a waste of material and an increase in the overall weight of the solid-state battery.

The porous layer 120 and the lithiophilic structures 124 are complementary to each other, in which the porous layer 120 can alleviate the volume expansion of the battery during charging, and the lithiophilic structures 124 can allow the lithium ions in the solid-state battery to be reduced at the lithiophilic structure to form lithium metal, and the lithium metal formed can then expand and grow outward with the lithiophilic structure 124 as a nucleation point, and its growth can be restricted to the pores H of the porous layer 120 for orderly manner. In other words, both the porous layer 120 and the lithiophilic structure 124 are indispensable. For example, when the lithiophilic structures 124 are not provided, the lithium metal tends to randomly deposit on the surface 111 of the current collecting layer 110, and cannot exactly be accommodated in the pores H of the porous layer 120, and after the solid-state battery has been cycled several times, the lithium metal deposited on the surface 111 of the current collecting layer 110 may even directly prop up the entire porous layer 120, causing the volume expansion of the solid-state battery.

In some embodiments, the lithiophilic structures 124 have a greater abundance closer to the current collecting layer 110 and the lithiophilic structures 124 have a lesser abundance further away from the current collecting layer 110. In more detail, the porous layer 120 has a first portion 122a closer to the current collecting layer 110 and a second portion 122b further away from the current collecting layer 110, and the abundance of the lithiophilic structures 124 in the first portion 122a is greater than the abundance of the lithiophilic structures 124 in the second portion 122b. In a further embodiment, the lithiophilic structures 124 may be distributed in the porous layer 120 in a "gradual" manner, that is, the abundance of the lithiophilic structures 124 may gradually decrease from the first portion 122a to the second portion 122b of the porous layer 120. With the above-mentioned special design of the abundance of the lithiophilic structures 124, the lithium ions can have the opportunity to contact with the lower layer of the lithiophilic structures 124 to enhance the reduction efficiency of the lithium ions, and the space of the pores H can be better utilized so that the lithium metal formed by reduction can be accommodated in the pores H in an orderly manner.

In some embodiments, the porous layer 120 further has a third portion 122c that is further away from the current collecting layer 110 than the second portion 122b, in which the second portion 122b is located between the first portion 122a and the third portion 122c, and the abundance of the lithiophilic structures 124 in the third portion 122c is zero. In other words, the porous layer 120 does not have any lithiophilic structure 124 in the upper layer (e.g., closer to the solid-state electrolyte layer 130). Based on the above configuration, the porous layer 120 may provide sufficient pore space for the lithium metal to be accommodated in the pores H in an orderly manner, thereby improving the problem of volume expansion of the solid-state battery during charging. It should be appreciated that, in some embodiments, the distribution profile (e.g., distribution of abundance) of the lithiophilic structures 124 in the porous layer 120 may be determined by performing Dnergy-Dispersive X-ray spectroscopy (EDX) analysis on the porous layer 120.

In some embodiments, the solid-state electrolyte layer 130 may include a lithium salt, a polymer, and a solid-state electrolyte 132 (in which the lithium salt and polymer are not shown in the figure), and the lithium salt, polymer, and solid-state electrolyte 132 are uniformly mixed with each other. Specifically, the lithium salt may include, for example, lithium bis(fluorosulfonyl)imide (LiO₄NS₂F₂, LiFSI), lithium bis(trifluoromethanesulfonyl)imide (LiN(CF₃SO₂)₂, LiTFSI), lithium perchlorate (LiClO₄), or combinations thereof; the polymer may include, for example, poly(methyl methacrylate), PMMA), polyethylene oxide (poly(ethylene oxide), PEO), polyvinylidene difluoride (polyvinylidene difluoride, PVDF), polyacrylonitrile (PAN), or combinations thereof; and the solid-state electrolyte 132 may include, for example, lithium lanthanum zirconium oxide (Li₇La₃Zr₂O₁₂, LLZO), lithium aluminum titanium phosphate (Li_{1.3}Al_{0.3}Ti_{1.7} (PO₄)₃, LATP), lithium lanthanum tantalum oxide (La_{0.57}Li_{0.29}TiO₃, LLTO), or combinations thereof.

In some embodiments, the solid-state electrolyte layer 130 overlaid on the porous layer 120. In some embodiments, the solid-state electrolyte layer 130 may be partially embedded in the porous layer 120. In some embodiments, the solid-state electrolyte layer 130 may be partially embedded into the porous layer 120 and extend toward the current collecting layer 110 and contact the surface 111 of the current collecting layer 110. In some embodiments, the solid-state electrolyte layer 130 substantially encapsulates each of the lithiophilic structures 124 and each of carbon nanomaterials CNM of the porous layer 120. In this way, the solid-state electrolyte layer 130 may provide complete encapsulation so that the composite negative electrode structure 100 as a whole may have a stronger structural strength as well as stability. In some embodiments, an average particle size of the solid-state electrolyte 132 may range from 0.1 µm to 10 µm to avoid the solid-state electrolyte 132 from entering the porous layer 120, so that the solid-state electrolyte 132 can cover the porous layer 120, and the pores H of the porous layer 120 can be used to accommodate more lithium metal, thereby enhancing the utilization of the pores H. In some embodiments, the average particle size of the solid-state electrolyte 132 is larger than the average pore size of the pores H. By selecting the average particle size of the solid-state electrolyte 132, the solid-state electrolyte 132 is overlaid on the porous layer 120, thereby the problem of lithium dendrite penetration can be reduced and the risk of short circuit can be reduced. On the other hand, since the solid-state electrolyte layer 130 has high ionic conductivity, it helps improve the overall performance of solid-state batteries and significantly enhance process convenience by integrating the lithium salt, polymer, and solid-state electrolyte 132 into a single layer.

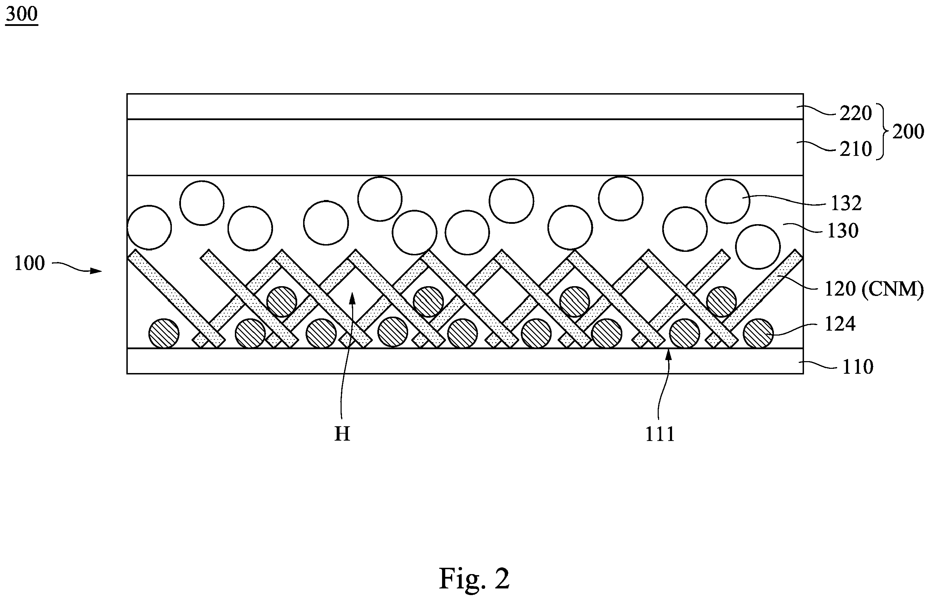

Referring to Fig. 2, a schematic cross-sectional view of a solid-state battery 300 according to some embodiments of the present disclosure is illustrated. Specifically, when the composite negative electrode structure 100 is integrated into the solid-state battery 300, an implementation thereof may be as shown in Fig. 2. In the embodiment shown in Fig. 2, the solid-state battery 300 includes a composite negative electrode structure 100 and a positive electrode 200, and the positive electrode 200 is disposed on the side of the solid-state electrolyte layer 130 of the composite negative electrode structure 100 facing away from the current collecting layer 110. In some embodiments, the positive electrode 200 may include a positive electrode material layer 210 and a positive electrode current collector 220. In some embodiments, the solid-state electrolyte layer 130 and the positive electrode current collector 220 are respectively located on opposite surfaces of the positive electrode material layer 210, such that the positive electrode material layer 210 is sandwiched between the positive electrode current collector 220 and the composite negative electrode structure 100. In some embodiments, the positive electrode material layer 210 may include, for example, nickel cobalt manganese (NCM), nickel cobalt manganese aluminum (NCMA), lithium cobalt oxide (LCO), lithium manganese oxide (LMO), lithium nickel manganese oxide (LNMO), nickel cobalt aluminum (NCA), lithium iron phosphate (LiFePO₄, LFP), lithium manganese iron phosphate (LMFP) or any combination thereof, and the positive electrode current collector 220 may include, for example, aluminum foil.

It should be understood that the connection relationships and effects of the components already described will not be repeated. In the following description, the effect of the present disclosure will be further verified through different stacked structures.

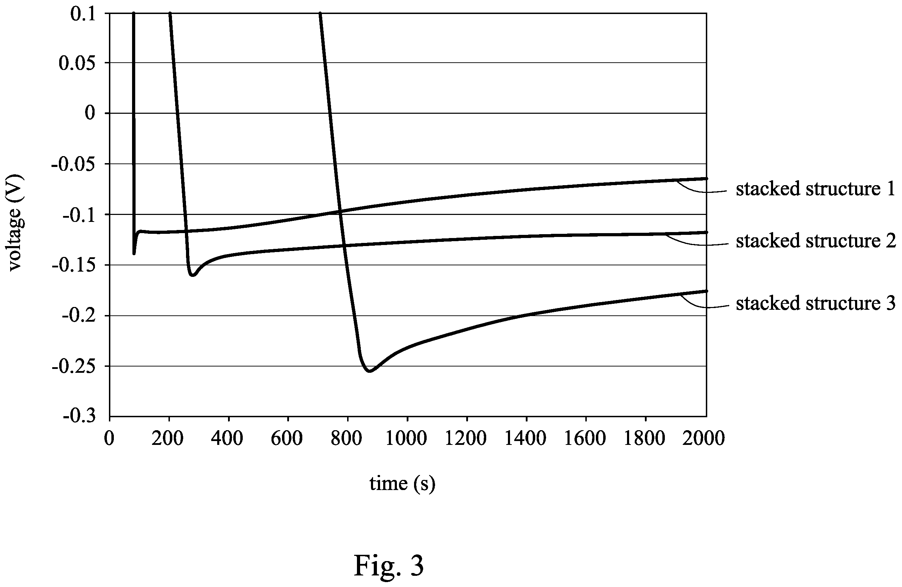

Referring to both Fig. 1 and Fig. 3, Fig. 3 illustrates a voltage-time relationship of different stacked structures. In Fig. 3, the stacked structure 1 is a current collecting layer 110, the material of which is copper foil; the stacked structure 2 includes a porous layer 120 on top of a current collecting layer 110, where the material of the current collecting layer 110 is copper foil, the carbon nanomaterials CNM included in the porous layer 120 are carbon nanotubes, and the thickness T1 of the porous layer 120 is 20 µm to 100 µm; the stacked structure 3 includes lithiophilic structures 124 on a current collecting layer 110, in which the material of the current collecting layer 110 is copper foil, the material of the lithiophilic structures 124 is an organic framework material containing copper, and the total thickness T2 of the lithiophilic structures 124 is 0.1 µm to 10 µm. As shown in Fig. 3, compared to the stacked structure 1, the stacked structure 2 and the stacked structure 3 have smoother voltage transitions. It can be seen that either by providing a porous layer 120 on the current collecting layer 110 or by providing lithiophilic structures 124 on the current collecting layer 110, both contribute to a slower and orderly growth of the lithium metal, allowing for a better controllability of the solid-state batteries.

According to the aforementioned embodiments of the present disclosure, the porous layer can accommodate lithium metal and alleviate the problem of volume expansion during charging of solid-state batteries. At the same time, the lithiophilic structures change the deposition pattern of lithium metal in the solid-state battery, which leads to the orderly deposition of lithium metal and prevents the massive generation of solid electrolyte interface due to the high specific surface area of the porous layer. As such, the irreversible capacity of the first charge and discharge is reduced, and the cycle stability and availability are improved. The negative composite structure of the present disclosure also inhibits lithium dentrite penetration and effectively improves battery safety.

## Claims

1. A composite negative electrode structure (100), **characterized by** comprising:
a current collecting layer (110);
a porous layer (120) located on a surface (111) of the current collecting layer (110) and comprising a plurality of pores (H);
a plurality of lithiophilic structures (124) located on the surface (111) of the current collecting layer (110) and accommodated in some of the pores (H); and
a solid-state electrolyte layer (130) located on the porous layer (120).

2. The composite negative electrode structure of claim 1, **characterized in that** the solid-state electrolyte layer (130) is partially embedded in the porous layer (120).

3. The composite negative electrode structure of any one of claims 1 to 2, **characterized in that** the porous layer (120) comprises a first portion (122a) near the current collecting layer (110) and a second portion (122b) away from the current collecting layer (110), and the abundance of the lithiophilic structures (124) in the first portion (122a) is greater than the abundance of the lithiophilic structures (124) in the second portion (122b).

4. The composite negative electrode structure of claim 3, **characterized in that** the porous layer (120) further comprises a third portion (122c), the second portion (122b) is located between the first portion (122a) and the third portion (122c), and the abundance of the lithiophilic structures (124) in the third portion (122c) is zero.

5. The composite negative electrode structure of any one of claims 1 to 4, **characterized in that** the average particle size of the lithiophilic structures (124) ranges from 0.1 µm to 1 µm.

6. The composite negative electrode structure of any one of claims 1 to 5, **characterized in that** the average pore size of the pores (H) ranges from 0.1 µm to 10 µm.

7. The composite negative electrode structure of any one of claims 1 to 6, **characterized in that** the porous layer (120) comprises a plurality of carbon nanomaterials (CNM), the carbon nanomaterials (CNM) comprise carbon nanowires, carbon nanotubes, carbon nanofilaments, carbon nanofibers, or combinations thereof, the carbon nanomaterials (CNM) are staggeredly stacked on each other, and the pores (H) are located between the adjacent carbon nanomaterials (CNM).

8. The composite negative electrode structure of any one of claims 1 to 7, **characterized in that** the total thickness (T1) of the porous layer (120) ranges from 1 µm to 100 µm, and the total thickness (T2) of the lithiophilic structures (124) ranges from 0.1 µm to 10 µm.

9. The composite negative electrode structure of any one of claims 1 to 8, **characterized in that** the lithiophilic structures (124) comprise silver, gold, platinum, aluminum, zinc, magnesium, silicon, tin, nickel, an oxide of any of the foregoing metals, a combination of any of the foregoing metals and metal oxides, or an organic framework material (MOF) of any of the foregoing metals.

10. The composite negative electrode structure of any one of claims 1 to 9, **characterized in that** the solid-state electrolyte layer (130) comprises:
a lithium salt;
a polymer comprising polyvinylidene fluoride, polymethyl methacrylate, polyacrylonitrile, polyethylene oxide, or combinations thereof; and
a solid-state electrolyte (132) comprising lithium aluminium titanium phosphate, lithium lanthanum tantalum oxide, lithium lanthanum zirconium oxide, or combinations thereof.

11. The composite negative electrode structure of claim 10, **characterized in that** the lithium aluminium titanium phosphate is Li_{1.3}Al_{0.3}Ti_{1.7}(PO₄)₃, the lithium lanthanum tantalum oxide is La_{0.57}Li_{0.29}TiO₃, and the lithium lanthanum zirconium oxide is Li₇La₃Zr₂O₁₂.

12. The composite negative electrode structure of claim 10, **characterized in that** the lithium salt is lithium perchlorate, lithium bis(fluorosulfonyl)imide, lithium bis(trifluoromethanesulfonyl)imide, or combinations thereof.

13. The composite negative electrode structure of any one of claims 3 to 4, **characterized in that** the abundance of the lithiophilic structures (124) gradually decreases from the first portion (122a) of the porous layer (120) to the second portion (122b) of the porous layer (120).

14. The composite negative electrode structure of any one of claims 1 to 13, **characterized in that** the solid-state electrolyte layer (130) encapsulates each of the lithiophilic structures (124).

15. The composite negative electrode structure of claim 7, **characterized in that** the solid-state electrolyte layer (130) encapsulates each of the carbon nanomaterials (CNM) of the porous layer (120).
